# EUROPEAN PATENT SPECIFICATION

(11) **EP 1 808 973 B1**
(45) Date of publication and mention of the grant of the patent: **21.01.2009**
(21) Application number: 05812375.3
(22) Date of filing: 17.11.2005
(51) Int. Cl.: H04L 29/06, H04J 13/00

(54) **A METHOD FOR DETECTING AND RESUMING MAINTENANCE LINK**
VERFAHREN ZUM FINDEN UND WIEDERAUFNEHMEN EINER WARTUNGSVERBINDUNG
PROCEDE DE DETECTION ET DE REPRISE D'UNE LIAISON DE MAINTENANCE

(30) Priority: 17.11.2004 CN 200410091250
(43) Date of publication of application: 18.07.2007
(73) Proprietor: Huawei Technologies Co., Ltd., Shenzhen 518129 Guangdong (CN)
(72) Inventor: ZHAO, Xuezhi, Shenzhen, Guangdong 518129 (CN)
(74) Representative: Thun, Clemens
(86) International application number: PCT/CN2005/001947
(87) International publication number: WO 2006/053499

(56) References cited:
- EP-A- 1 365 609
- EP-A- 1 401 223
- EP-A- 1 443 693
- CN-A- 1 414 716
- CN-A- 1 445 947
- US-B1- 6 195 549

## Description

### Field of the Invention

The present invention relates to radio communication technologies, and more particularly, to a method and a device for checking and resuming a maintenance link.

### Background of the Invention

Along with the development of radio communication technologies, the scale of a radio communication network becomes larger and larger, and a composing architecture thereof is more and more complicated. Correspondingly, a higher requirement on network maintainability has been put forward. Now, protocols in connection with the third generation radio communication systems such as a Wideband Code Division Multiple Access (WCDMA) system, a Code Division Multiple Access (CDMA) system and a Time Division-Synchronization Code Division Multiple Access (TD-SCDMA) network, only prescribe that a link based on an Internet Protocol over Asynchronous Transfer Mode (IPOA) protocol should be established between a Radio Network Controller (RNC) and a base station (NodeB), but do not illustrate how to establish a maintenance link between a NodeB and a NodeB controller. Accordingly, a NodeB can not remotely start working by itself, leading to great inconvenience of network maintenance. There are mainly two methods for establishing a maintenance link between a NodeB and a NodeB controller. The first method is that, maintenance personnel configure respectively related data on the NodeB side and the RNC side to establish a maintenance link between the NodeB and the NodeB controller. However, such maintenance manner is inconvenient, and tends to result in mistakes. The second method is that, all the NodeBs, when starting up at the first time, establish default maintenance links between themselves and the NodeB controllers using Permanent Virtual Channels (PVCs) configured before leaving a factory and Internet Protocol (IP) addresses, acquire formal configuration information of PVCs and IP addresses from the NodeB controllers, establish formal maintenance links between themselves and the NodeB controllers according to the acquired formal configuration information of PVCs and IP addresses, and delete original configuration information of the default PVCs and the IP addresses. Then all the NodeBs communicate with the NodeB controllers through the formal maintenance links during the follow-up restarting procedures. However, as all the NodeBs use fixed communication ports or IP addresses, such method has the following disadvantages: all the NodeBs cannot work in parallel at the same time, moreover, an operation maintenance and data managed by the network are relatively complicated when the NodeBs are working. It should be noted that, the NodeBs can only indirectly interact maintenance information with a NodeB operation maintenance platform through the NodeB controllers, since all the NodeBs can just communicate with the NodeB controllers directly.

Therefore, a solution, that is, an automatic establishment of an operation maintenance channel of a 3G NodeB based on the IPOA, has been put forward to give a method about how to automatically establish, by the NodeB, a maintenance link between the NodeB and a NodeB controller, so as to solve the problems such as fussy operations, heavy workload, fallible-operations, high maintenance cost, poor quality, and so on, which are resulted from lack of a mechanism of establishing a maintenance link automatically. According to the solution, a low-level physical link checking mechanism and a Bootstrap Protocol (BOOTP) are adopted to establish a default maintenance link based on the IPOA protocol automatically, if the NodeB does not find an available maintenance link based on the IPOA. The method specifically includes the following steps.

Firstly, establishing a default PVC between the NodeB and the NodeB controller.

Secondly, the NodeB side initiates a BOOTP request in a broadcast mode, and transmits the BOOTP request to the NodeB controller through the established PVC. The NodeB controller is used for monitoring and processing packets of the BOOTP request.

Thirdly, the NodeB controller returns to the NodeB a BOOTP response including an IP address allocated for the NodeB, after receiving the BOOTP request.

Lastly, the NodeB acquires the IP address allocated for it from the BOOTP response, and creates a maintenance link based on the IPOA protocol according to the acquired IP address and the default PVC, in other words, establishes an operation maintenance link between the NodeB and the NodeB controller.

After the maintenance link between the NodeB and the NodeB controller is established through the above steps, a route between the NodeB controller and the NodeB operation maintenance platform can be configured or pre-configured, to make interconnection between the above-mentioned maintenance link, which is based on the IPOA protocol established between the NodeB and the NodeB controller, and a maintenance link, which is between the NodeB controller and the NodeB operation maintenance platform, thus to establish a maintenance link between the NodeB and the NodeB operation maintenance platform, that is, a maintenance communication between the NodeB and the NodeB remote operation maintenance platform is routed through the NodeB controller.

The above-mentioned solution can solve the problem of how to automatically establish , by the NodeB side, a maintenance link between itself and a NodeB controller at an early stage in networking. However, when the network is working , disconnections of the maintenance link between the NodeB and the NodeB controller happen inevitably due to some reasons, for instance, a physical disconnection of a transmission relay circuit (E1) bearing the IPOA maintenance link, a re-configuration for data of the maintenance link based on the IPOA protocol at the RNC side due to a network expansion, or the like, may lead to disconnection of a maintenance link between the NodeB and the NodeB controller, further result in the NodeB controller losing control of the remote NodeB. Meanwhile, a maintenance link may be obstructed due to data mistakes when configured by human at the early stage in networking. Since the above-mentioned solution does not provide any checking mechanism, it is unable to automatically establish or resume a maintenance link when the network is working, which causes that a remote maintenance can not be implemented. In order to solve the abnormal problems happened when the network is working, maintenance persons have to implement local maintenance operations at the NodeB, which is inconvenient, and increases the maintenance cost.

In respect of the above problems, a solution in the prior art is to protect a maintenance link based on the IPOA protocol using a redundancy protection, that is, setting a redundancy bear physical link for the maintenance link based on the IPOA protocol so as to protect the maintenance link based on the IPOA protocol. For instance, an IPOA PVC is established on an Inverse Multiplexing for ATM (IMA) group, and each IMA includes multiple E1 s. So, the disconnection of one E1 will not lead to the disconnection of the whole maintenance link based on the IPOA protocol. However, a maintenance link based on the IPOA protocol in 3 network which cannot use the IMA protocol due to limit of networking may not be protected according to the solution, since the solution is dependent on the IMA protocol, and the like protocols.

Another solution in the prior art is to use an Automatic Protection Switching (APS) technology to backup a PVC link bearing the IPOA protocol. If the PVC link bearing the IPOA protocol is disconnected, the PVC bearing the IPOA protocol is automatically switched to the backup link, thereby protecting the maintenance link based on the IPOA protocol. However, the APS technology is relatively complicated, and can only protect a maintenance link based on the IPOA protocol in a PVC level, but not the disconnection in an IP level, which results from change of an IP address, change of a route configuration, and the like when the network is expanded

EP 1365609 Al discloses a method for automatically establishing a base station operating and maintaining channel in International Mobile Telecommunications 2000.

EP 1443693 A1 discloses a method for establishing operation and mainentance channels at lub interfaces between two base stations in Universal Terrestrial Radio Access Network (UTRAN)s for WCDMA cellular mobile communication systems.

EP 1401223 A1 discloses a method for a device in a base station of mobile communication system to obtain IP address automatically.

### Summary of the Invention

Embodiments of the present invention provide a method and a system for checking and resuming a maintenance link

Techincal solution in accordance with embodiments of the present invention is as follows.

A method for checking and resuming a maintenance link, includes the following processes:
checking a maintenance link based on an Internet Protocol over Asynchronous Transfer Mode ,IPOA, protocol;
determining whether an available physical port exists, when the maintenance link is checked to be disconnected;
checking whether the available physical port has been configured;
establishing a default maintenance link based on the IPOA protocol on the available physical port, acquiring configuration data from a base station controller through the default maintenance link, and configuring the disconnected maintenance link according to the configuration data, if the available physical port has been configured;
resetting the base station, if the available physical port has not been configured.

The method further includes the processes:
detecting existing configuration data for the maintenance link;
configuring the maintenance link according to the existing configuration data;
acquiring the configuration data from the base station controller, configuring the maintenance link according to the configuration data, and returning to the process of checking the maintenance link, if there are no existing configuration data for the maintenance link.

The configuration data are acquired from the base station controller by a Bootstrap Protocol ,BOOTP, procedure.

The BOOTP procedure includes:
sending a BOOTP request to the base station controller by the base station;
receiving a BOOTP response from the base station controller by the base station;
downloading the configuration data from the BOOTP response coming from the base station controller.

The method further includes the processes of:
the base station determining whether to receive the BOOTP response from the base station controller;
receiving the BOOTP response from the base station controller, if the base station determines to receive the BOOTP response from the base station controller;
proceeding to the process of determining whether an available physical port exists, if the base station determines not to receive the BOOTP response from the base station controller.

The method further includes the processes of:
when the base station is at a normal working stage, before the process of checking the maintenance link, checking whether a state of a physical link bearing the maintenance link is changed from disconnected to connected state;
checking the maintenance link, if the state of the physical link bearing the maintenance link is changed from disconnected to connected state.

The physical link is a User Network Interface ,UNI, an Inverse Multiplexing for Asynchronous Transfer Mode ,IMA, or a Synchronous Transmission Mode-1 ,STM-1.

The process of establishing a default maintenance link on the available physical port is to establish a default Permanent Virtual Channel ,PVC.

The process of checking the maintenance link is implemented by initiating a Ping procedure for checking whether a link on an Internet Protocol ,IP, protocol level is connected or not.

The process of checking the maintenance link is implemented by initiating a Ping procedure.

To sum up, in one aspect, the method in accordance with embodiments of the present invention starts up a Ping procedure for checking whether a link on the IP protocol level is connected or not, when the NodeB is at an early working stage, that is, after the NodeB starts up, dynamically checks the configured maintenance link based on the IPOA protocol and the physical link, and resumes problems found during the checking procedure using measures in time. In another aspect, the method in accordance with embodiments of the present invention dynamically starts up the Ping procedure when checking that the physical link state of a maintenance link bearing the IPOA protocol is changed from disconnected to connected state, under the circumstances that the NodeB is at a normal working stage, dynamically checks the configured maintenance link based on the IPOA protocol and the physical link, and resumes the problems found during the checking procedure, by using measures in time. By doing so, reliability of the maintenance link of the NodeB is assured, no matter the NodeB is at the initial working stage or at the normal working stage. The maintainability problem of a radio access network device, resulting from disconnection of a maintenance link during the initial procedure of networking or during the working procedure is solved. Moreover, the automatic maintenance and resume of the NodeB devices is implemented without people's participation.

### Brief Description of the Drawings

Fig. 1 is a flow chart illustrating a method for checking and resuming a maintenance link in accordance with an embodiment of the present invention.
Fig. 2 is a flow chart illustrating a method for checking and resuming a maintenance link in accordance with another embodiment of the present invention.

### Detailed Description of the Invention

The present invention is hereinafter described in detail with reference to the drawings to further clarify the objectives, technical solutions and advantages of the present invention.

Embodiments of the present invention adopt the following techinical solution. checking a maintenance link based on an IPOA protocol, if it is checked that the maintenance link based on the IPOA protocol is obstructed, and there is an available physical port, checking whether the availble physical port has been configured; if the available physical port has been configured, establishing a default maintenance link based on the IPOA protocol on the available physical port, acquiring a configuration file from a NodeB controller through the default maintenance link based on the IPOA protocol, and configuring the maintenance link based on the IPOA protocol according to the configuration file; if the available physical port has not been configured, resetting the NodeB.

Hereunder, a method in accordance with an embodiment of the present invention is illustrated by taking a method for checking and resuming a maintenance link between a NodeB and a RNC as an example. Obviously, the method in accordance with an embodiment of the present invention is also applicable for checking and resuming a maintenance link between radio network devices of systems such as the CDMA2000, the TDSCDMA, and the like. The physical transmission between the NodeB and the RNC is generally implemented in a User Network Interface (UNI) manner, an IMA manner, a Synchronous Transmission Mode-1 (STM-1) manner, or the like. Furthermore, the Ping procedure in accordance with embodiments of the present invention is a standard manner for checking disconnections in the IP level.

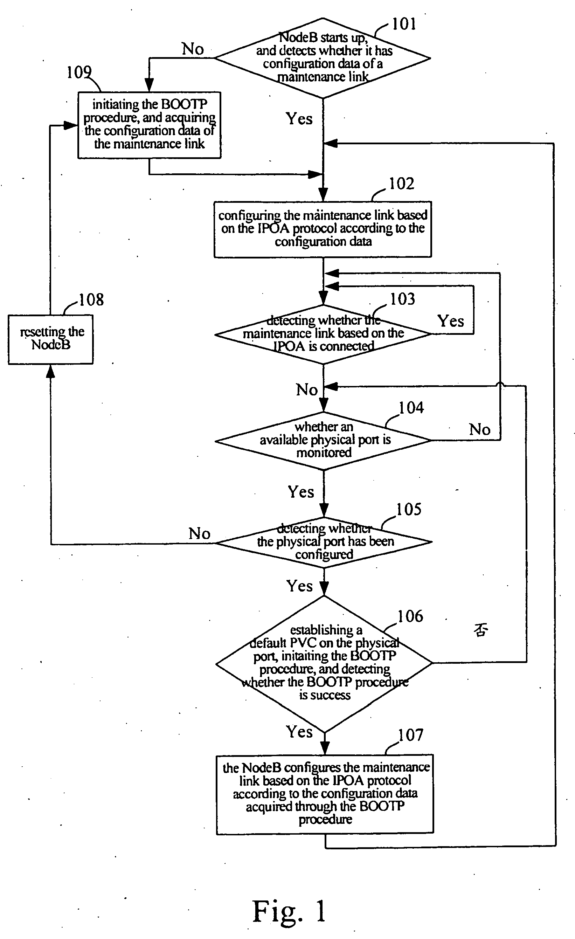

In accordance with an embodiment of the present invention, when the NodeB works at an early stage, a maintenance link between the NodeB and the RNC is often disconnected due to data mistakes configured by human or the inconsistency between the data configured at the NodeB side and the data configured at the RNC side. So, it is necessary to check an established maintenance link, after the NodeB starts up and the maintenance link is established by configuring the data of the maintenance link. Fig. 1 shows a flow chart illustrating a method for checking and resuming a maintenance link when a NodeB works at an early stage, and the method specifically includes the following steps.

Step 101: the NodeB first detects whether it has configuration data of a maintenance link based on the IPOA protocol after starting up. If the NodeB has configuration data of a maintenance link based on the IPOA protocol, proceeding to Step 102; if the NodeB has no configuration data of a maintenance link based on the IPOA protocol, proceeding to Step 109.

Step 102: configuring the maintenance link based on the IPOA protocol according to the configuration data.

Step 103: initaiting a Ping procedure to check, within a configured time limit, whether the maintenance link based on the IPOA protocol is connected; if the maintenance link based on the IPOA protocol is connected, continuing to perform the process illustrated in the step, that is, to check whether the maintenance link based on the IPOA protocol is still connected or not; if the maintenance link based on the IPOA protocol is not connected, proceeding to Step 104.

In the step, an initial synchronous judgment, which may cost 15 minutes for example, can be implemented each time after the NodeB is reset and configuration about the data of the maintenance link is finished, so as to avoid disconnection of the maintenance link resulting from configured data mistakes, or the inconsistency between the data configured at the NodeB side and the data configured at the RNC side.

Step 104: determining whether an available physical port can be monitored within a configured time limit; if an available physical port can be monitored within the configured time limit, proceeding to Step 105; if no available physical port can be monitored within the configured time limit, proceeding to Step 103.

In the step, if no available physical port is monitored within the configured time limit, for example, 10 minutes, the reason thereof may be that, the NodeB is isolated, or unknown physical connections are used when performing the networking. Therefore, proceeding to Step 103 to re-implement the Ping checking procedure.

Step 105: checking whether the available physical port has been configured; if the available physical port has been configured, proceeding to Step 106; if the available physical port has not been configured, proceeding to Step 108.

In the step, if an available physical port is detected, and has been configured, it means that the physical connection configurations such as the UNI and the like are correct. The disconnection results from the data of the upper-level maintenance link based on the IPOA protocol, which are configured mistakenly, or a physical port which is monitored mistakenly, for example, the next-level physical port. At this time, the operations given in Step 106 can be implemented. If an available physical port is detected, but has not been configured, it means that there are mistakes in the configuration of the data file, which may result from the configuration mistakes in the UNI and/or the IMA, or from the data configuration mistakes of the maintenance link based on the IPOA protocol. At this time, the NodeB can be reset, and the BOOTP procedure can be implemented.

Step 106: establishing a default PVC at the available physical port, initaiting a BOOTP procedure, checking whether the BOOTP procedure succeeds; if the BOOTP procedure succeeds, proceeding to Step 107; if the BOOTP procedure fails, proceeding to Step 104.

In the step, the BOOTP procedure is added to avoid disconnections of all Iub interfaces between the NodeB and the RNC, or resetting mistakenly caused by monitoring an available physical port of the next-level cascade NodeB due to the power-off state of the RNC. The process of initiating the BOOTP procedure specifically includes: the NodeB transmitting a BOOTP request to the RNC, and receiving a BOOTP response from the RNC. The process of determining whether the BOOTP procedure succeeds or not refers to the steps of the NodeB detecting whether the BOOTP response is returned within a configurd time limit; if the BOOTP response is returned within a configured time limit, it means the BOOTP procedure succeeds; if the BOOTP response is not returned within the configured time limit, the BOOTP procedure fails.

Step 107: the NodeB configures the maintenance link based on the IPOA protocol according to the configuration data of the maintenance link acquired during the BOOTP procedure, and returning to the Step 102.

The process of the NodeB configuring the maintenance link based on the IPOA protocol according to the configuration data of the maintenance link acquired during the BOOTP procedure specifically includes the steps of: the NodeB downloading the configuration data of the maintenance link from the BOOTP response received from the RNC, and configuring the maintenance link based on the IPOA protocol according to the downloaded configuration data.

Step 108: resetting the NodeB.

Step 109: initiating the BOOTP procedure, acquiring from the RNC the configuration data of the maintenance link based on the IPOA protocol and then proceeding to Step 102.

In the step, the specific steps of initiating the BOOTP procedure are the same as the corresponding steps illustrated in Step 106, so there is no more description.

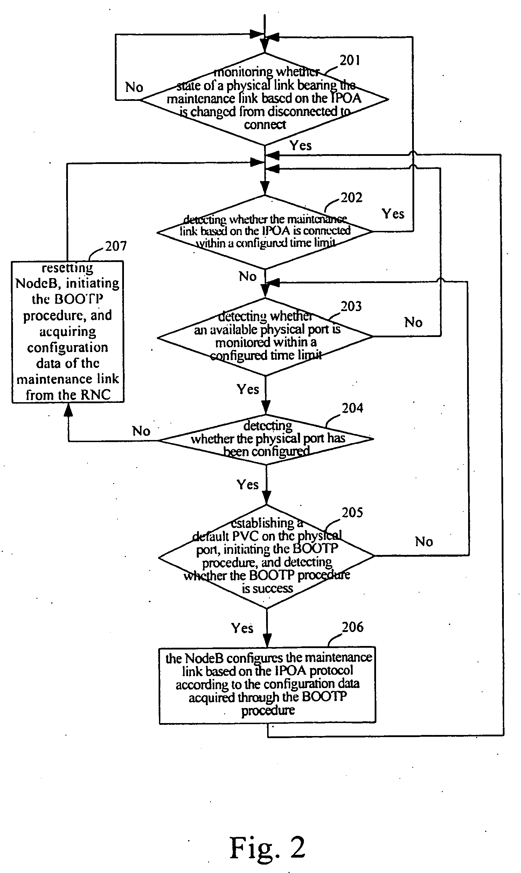

When the NodeB works at the early stage, if it is checked, through Step 103, that the maintenance link between the NodeB and the RNC is connected, it means that the data configured at the NodeB side and the data configured at the RNC side are correct, and then the NodeB enters into the normal working stage. If there is disconnection of the maintenance link when the NodeB works during the follow-up procedure, the disconnection may result from re-configuration for the data of the maintenance link based on the IPOA protocol at the RNC side, which is implemented when the physical link is destroyed or to meet the requirements of a network expansion. Under such a condition, the checking procedure is initiated again only when the system checks that state of the physical link bearing the maintenance link based on the IPOA protocol is changed from disconnected to connected, according to another embodiment of the present invention, so as to check failures of the maintenance link and resume the failures. Fig. 2 shows a flow chart illustrating a method for checking and resuming a maintenance link when a NodeB works at a normal stage, the method specifically includes the following steps.

Step 201: a NodeB monitors a physical link bearing a maintenance link based on the IPOA protocol in time when the NodeB is at the normal working stage, to determine whether state of the physical link is changed from disconnected to connected; if the state of the physical link is changed from disconnected to connected, proceeding to Step 202; if the state of the physical link is not changed from disconnected to connected, returning to Step 201.

In the step, the disconnection of the physical link, as described above, results from re-configuration for the data of the maintenance link based on the IPOA protocol at the RNC side, since the physical link is destroyed or the network is expanded. At this time, if the physical link is checked to be disconnected continuously, the checking procedure is not initiated, but waiting for resuming of the physical link. If the physical link is resumed, the system will monitor that the state of the physical link is changed from disconnected to connected, and the checking procedure is initiated at this time.

Step 202: checking whether the maintenance link based on the IPOA protocol is connected within a configured time limit; if the maintenance link based on the IPOA protocol is connected within the configured time limit, returning to Step 201; otherwise, proceeding to Step 203.

After it is checked that the state of the physical link is changed from disconnected to connected in Step 201, but the state of the maintenance link based on the IPOA protocol is disconnected within a configured time limit, for example, 30 minutes, it means that the disconnection of the maintenance link based on the IPOA protocol results from the RNC switching a frame or modifying the data. At this time, proceeding to the operations in Step 203.

Step 203: detecting whether an available physical port can be monitored within a configured time limit; if an available physical port can be monitored within the configured time limit, proceeding to Step 204; if no available physical port can be monitored within the configured time limit, proceeding to Step 202.

Step 204: checking whether the available physical port has been configured; if the available physical port has been configured, proceeding to Step 205; if the available physical port has not been configured, proceeding to Step 207.

Step 205: establishing a default PVC at the available physical port, initiating a BOOTP procedure, checking whether the BOOTP procedure succeeds; if the BOOTP procedure succeeds, proceeding to Step 206; if the BOOTP procedure fails, returning to Step 203.

Step 206: the NodeB configures the maintenance link based on the IPOA protocol according to the configuration data acquired during the BOOTP procedure, and returning to Step 202.

Step 207: resetting the NodeB, initiating the BOOTP procedure, acquiring from the RNC the configuration data to configure the maintenance link based on the IPOA protocol, and then proceeding to Step 202.

To sum up, the foregoing descriptions are only preferred embodiments of the present invention and are not used for limiting the protection scope thereof.

## Claims

1. A method for checking and resuming a maintenance link, **characterized in that**, comprising:
checking a maintenance link based on an Internet Protocol over Asynchronous Transfer Mode ,IPOA, protocol(103) (202);
determining whether an available physical port exits, when the maintenance link is checked to be disconnected (104) (203);
checking whether the available physical port has been configured (105) (204);
establishing a default maintenance link based on the IPOA protocol on the available physical port (106) (205), acquiring configuration data from a base station controller through the default maintenance link, and configuring the disconnected maintenance link according to the configuration data, if the available physical port has been configured (107) (206).

2. The method of Claim 1, further comprising:
resetting the NodeBbase station, it the available physical port has not been configured (108) (207).

3. The method of Claim 1, further comprising:
detecting existing configuration data for the maintenance link (101);
configuring the maintenance link according to the existing configuration data (102);
acquiring the configuration data from the base station controller (109) (207), configuring the maintenance link according to the configuration data (102), and returning to the process of checking the maintenance link, if there are no existing configuration data for the maintenance link.

4. The method of any one of Claims 1 to 3, wherein the configuration data are acquired from the base station controller by a Bootstrap Protocol ,BOOTP, procedure.

5. The method of Claim 4, wherein the BOOTP procedure comprises:
sending a BOOTP request to the base station controller by the base station (106) (109) (205) (207);
receiving a BOOTP response from the base station controller by the base station (106)(109)(205)(207);
downloading the configuration data from the BOOTP response coming from the base station controller (107) (109) (206) (207).

6. The method of Claim 5, further comprising:
the base station determining whether to receive the BOOTP response from the base station controller;
receiving the BOOTP response from the base station controller, if the base station determines to receive the BOOTP response from the base station controller;
proceeding to the process of determining whether an available physical port exists, if the base station determines not to receive the BOOTP response from the base station controller.

7. The method of Claim 1, further comprising:
when the base station is at a normal working stage, before the process of checking the maintenance link, checking whether a state of a physical link bearing the maintenance link is changed from disconnected to connected state (201);
checking the maintenance link, if the state of the physical link bearing the maintenance link is changed from disconnected to connected state (202).

8. The method of Claim 7, wherein the physical link is a User Network Interface ,UNI, an Inverse Multiplexing for Asynchronous Transfer Mode ,IMA, or a Synchronous Transmission Mode-1 ,STM-1

9. The method of Claim 1, wherein the process of establishing a default maintenance link on the available physical port is to establish a default Permanent Virtual Channel ,PVC.

10. The method of any one of Claims Ito 9, wherein the process of checking the maintenance link is implemented by initiating a Ping procedure for checking whether a link on an Internet Protocol ,IP, protocol level is connected or not

11. A device for checking and resuming a maintenance link, **characterized in that**, comprising:
means for checking a maintenance link based on an Internet .Protocol over Asynchronous Transfer Mode ,IPOA, protocol;
means for determining whether an available physical port exists, when the maintenance link is checked to be disconnected;
means for checking whether the available physical port has been configured;
means for establishing a default maintenance link based on the IPOA protocol on the available physical port, acquiring configuration data from a base station controller through the default maintenance link, and configuring the disconnected maintenance link according to the configuration data, if the available physical port has been configured.

12. The device of Claim 11, further comprising:
means for resetting the base station if the available physical port has not been configured;
means for checking whether a state of a physical link bearing the maintenance link is changed from disconnected to connected state, when the base station is at a normal working stage.

## Patentansprüche

1. Verfahren zum Prüfen und Wiederherstellen einer Wartungsverbindung, **dadurch gekennzeichnet, dass** das Verfahren umfasst:
Prüfen einer Wartungsverbindung, die auf einem Internetprotokoll über Asynchron-Übertragungsmodus-Protokoll, IPOA-Protokoll, (103) (202) basiert;
Feststellen, ob ein verfügbarer physikalischer Port existiert, wenn die Wartungsverbindung als unterbrochen erkannt wird (104) (203);
Prüfen, ob der verfügbare physikalische Port konfiguriert wurde (105) (204);
Einrichten einer Standard-Wartungsverbindung, die auf dem IPOA-Protokoll basiert, auf dem verfügbaren physikalischen Port (106) (205), Erhalten von Konfigurierungsdaten von einem Basisstation-Controller durch die Standard-Wartungsverbindung, und Konfigurieren der unterbrochenen Wartungsverbindung gemäß der Konfigurierungsdaten, falls der verfügbare physikalische Port konfiguriert wurde (107) (206).

2. Verfahren nach Anspruch 1, ferner umfassend:
Rücksetzen der NodeB-Basisstation, falls der verfügbare physikalische Port nicht konfiguriert wurde (108) (207).

3. Verfahren nach Anspruch 1, ferner umfassend:
Detektieren bestehender Konfigurierungsdaten für die Wartungsverbindung (101);
Konfigurieren der Wartungsverbindung gemäß der bestehenden Konfigurierungsdaten (102);
Abfragen der Konfigurierungsdaten vom dem Basisstation-Controller (109) (207), Konfigurieren der Wartungsverbindung gemäß der Konfigurierungsdaten (102), und Rückkehren zu dem Prüfverfahren der Wartungsverbindung, falls es keine bestehenden Konfigurierungsdaten für die Wartungsverbindung gibt.

4. Verfahren nach einem der Ansprüche 1 bis 3, wobei die Konfigurierungsdaten von dem Basisstation-Controller durch ein Bootstrap-Protokoll-Verfahren, BOOTP-Verfahren, abgefragt werden.

5. Verfahren nach Anspruch 4, wobei das BOOTP-Verfahren umfasst:
Senden einer BOOTP-Anfrage durch die Basisstation an den Basisstation-Controller (106) (109) (205) (207);
Empfangen einer BOOTP-Anfrage durch die Basisstation von dem Basisstation-Controller (106) (109) (205) (207);
Downloaden der Konfigurierungsdaten aus der BOOTP-Anfrage, die von dem Basisstation-Controller kommt (107) (109) (206) (207).

6. Verfahren nach Anspruch 5, ferner umfassend:
Feststellen durch die Basisstation, ob die BOOTP-Anfrage von dem Basisstation-Controller zu empfangen ist;
Empfangen der BOOTP-Anfrage von dem Basisstation-Controller, falls die Basisstation bestimmt, dass die BOOTP-Anfrage von dem Basisstation-Controller zu empfangen ist;
Fortfahren zu dem Bestimmungsverfahren, ob ein verfügbarer physikalischer Port existiert, falls die Basisstation bestimmt, dass die BOOTP-Anfrage von dem Basisstation-Controller nicht zu empfangen ist.

7. Verfahren nach Anspruch 1, ferner umfassend:
wenn die Basisstation in einer normalen Arbeitsphase ist, vor dem Verfahren zur Überprüfung der Wartungsverbindung Überprüfen, ob ein Zustand einer physikalischen Verbindung, die die Wartungsverbindung trägt, von dem unterbrochenen zu einem verbundenen Status wechselt (201);
Prüfen der Wartungsverbindung, falls der Status der physikalischen Verbindung, die die Wartungsverbindung trägt, von dem unterbrochenen zu einem verbundenen Status wechselt (202).

8. Verfahren nach Anspruch 7, wobei die physikalische Verbindung ein User Network Interface, UNI, ein Inverses Multiplexing für Asynchron-Übertragungs-Modus, IMA, oder ein Synchron-Übertragungs-Modus-1, STM-1, ist.

9. Verfahren nach Anspruch 1, wobei das Verfahren zum Einrichten einer Standard-Wartungsverbindung auf dem verfügbaren physikalischen Port dazu dient, einen Standard-Permanent-Virtual-Channel, PVC, einzurichten.

10. Verfahren nach einem der Ansprüche 1 bis 9, wobei das Verfahren zum Überprüfen der Wartungsverbindung durch Einleiten eines Ping-Verfahrens implementiert wird, um zu prüfen, ob eine Verbindung aus einer Internet Protokoll-Ebene, IP-Protokollebene, verbunden ist oder nicht.

11. Vorrichtung zum Prüfen und Wiederherstellen einer Wartungsverbindung, **dadurch gekennzeichnet, dass** die Vorrichtung umfasst:
Mittel zum Überprüfen einer Wartungsverbindung, die auf einem Intemetprotokoll über Asynchron-Übertragungsmodus-Protokoll, IPOA-Protokoll, basiert;
Mittel zum Feststellen, ob ein verfügbarer physikalischer Port existiert, wenn festgestellt wird, dass die Wartungsverbindung unterbrochen ist;
Mittel zum Prüfen, ob der verfügbare physikalische Port konfiguriert wurde;
Mittel zum Einrichten einer Standard-Wartungsverbindung, die auf dem IPOA-Protokoll basiert, auf dem verfügbaren physikalischen Port, zum Erhalten von Konfigurierungsdaten von einem Basisstation-Controller durch die Standard-Wartungsverbindung, und zum Konfigurieren der unterbrochenen Wartungsverbindungen gemäß der Konfigurierungsdaten, falls der verfügbare physikalische Port konfiguriert wurde.

12. Vorrichtung nach Anspruch 11, ferner umfassend:
Mittel zum Rücksetzen der Basisstation, falls der verfügbare physikalische Port nicht konfiguriert wurde;
Mittel zum Prüfen, ob ein Status einer physikalischen Verbindung, die die Wartungsverbindung trägt, von dem unterbrochenen zu einem verbundenen Status wechselt, wenn die Basisstation in einer normalen Arbeitsphase ist.

## Revendications

1. Procédé de vérification et de reprise d'une liaison de maintenance, **caractérisé en ce que**, comprenant:
vérifier une liaison de maintenance basée sur un Protocole Internet sur Protocole en Mode de Transfert Asynchrone, IPOA, (103) (202);
déterminer si un port physique disponible existe lorsqu'il s'avère que la liaison de maintenance est déconnectée (104) (203);
vérifier si le port physique disponible a été configuré (105) (204);
établir une liaison de maintenance par défaut basée sur le protocole IPOA sur le port physique disponible (106) (205), acquérir des données de configuration d'un dispositif de commande de station de base par la liaison de maintenance par défaut, et configurer la liaison de maintenance déconnectée selon les données de configuration si le port physique disponible a été configuré (107) (206).

2. Procédé selon la revendication 1, comprenant en outre:
la remise à l'état initial de la station de BaseNoeud, si le port physique disponible n'a pas été configuré (108) (207) .

3. Procédé selon la revendication 1, comprenant en outre:
détecter des données de configuration existantes pour la liaison de maintenance (101);
configurer la liaison de maintenance en accord avec les données de configuration existantes (102);
acquérir les données de configuration du dispositif de commande de la station de base (109) (207), configurer la liaison de maintenance en accord avec les données de configuration (102), et retourner au processus de vérification de la liaison de maintenance s'il n'y a pas de données de configuration existantes pour la liaison de maintenance.

4. Procédé selon l'une quelconque des revendications 1 à 3, où les données de configuration sont acquises du dispositif de commande de la station de base par une procédure de Protocole d'Amorçage, BOOTP.

5. Procédé selon la revendication 4, où la procédure BOOTP comprend:
transmettre une requête BOOTP au dispositif de commande de la station de base par la station de base (106) (109) (205) (207);
recevoir une réponse BOOTP du dispositif de commande de la station de base par la station de base (106) (109) (205) (207);
charger les données de configuration de la réponse BOOTP provenant du dispositif de commande de la station de base (107) (109) (206) (207).

6. Procédé selon la revendication 5, comprenant en outre:
la station de base déterminant s'il faut recevoir la réponse BOOTP du dispositif de commande de la station de base;
recevoir la réponse BOOTP du dispositif de commande de la station de base si la station de base détermine qu'il faut recevoir la réponse BOOTP du dispositif de commande de la station de base;
avancer au processus de détermination si un port physique disponible existe, si la station de base détermine qu'il ne faut pas recevoir la réponse BOOTP du dispositif de commande de la station de base.

7. Procédé selon la revendication 1, comprenant en outre:
lorsque la station de base se trouve à un étage de travail normal, avant le processus de vérification de la liaison de maintenance, vérifier si un état d'une liaison physique portant la liaison de maintenance est changé de l'état déconnecté à l'état connecté (201);
vérifier la liaison de maintenance si l'état de la liaison physique portant la liaison de maintenance est changé de l'état déconnecté à l'état connecté (202).

8. Procédé selon la revendication 7, où la liaison physique est une Interface de Réseau Utilisateur, UNI, un Multiplexage Inverse pour le Mode de Transfert Asynchrone, IMA, ou un Mode-1 de Transmission Synchrone, STM-1.

9. Procédé selon la revendication 1, où le processus d'établissement d'une liaison de maintenance par défaut sur le port physique disponible consiste à établir un Canal Virtuel Permanent par défaut, PVC.

10. Procédé selon l'une quelconque des revendications 1 à 9, où le processus de vérification de la liaison de maintenance est mis en oeuvre en initiant une procédure Ping pour vérifier si une liaison sur un niveau de protocole, Protocole Internet, IP est connectée ou non.

11. Dispositif de vérification et de reprise d'une liaison de maintenance, **caractérisé en ce que**, comprenant:
des moyens pour vérifier une liaison de maintenance basée sur un Protocole Internet sur un Protocole en Mode de Transfert Asynchrone, IPOA;
des moyens pour déterminer si un port physique disponible existe, lorsqu'il est établi que la liaison de maintenance est déconnectée;
des moyens pour vérifier si le port physique disponible a été configuré;
des moyens pour établir une liaison de maintenance par défaut basée sur le Protocole IPOA sur le port physique disponible, acquérir des données de configuration d'un dispositif de commande de station de base par la liaison de maintenance par défaut et configurer la liaison de maintenance déconnectée selon les données de configuration si le port physique disponible a été configuré.

12. Dispositif selon la revendication 11, comprenant en outre:
des moyens pour la remise à l'état initial de la station de base si le port physique disponible n'a pas été configuré;
des moyens pour vérifier si un état d'une liaison physique portant la liaison de maintenance est changé de l'état déconnecté à l'état connecté lorsque la station de base se trouve à un étage de travail normal.
